# EUROPEAN PATENT APPLICATION

(11) **EP 4 822 635 A1**
(43) Date of publication of application: **14.10.2026**
(21) Application number: 24912309.2
(22) Date of filing: 09.12.2024
(51) Int. Cl.: G06Q 50/10

(54) **INFORMATION PROCESSING DEVICE, INFORMATION PROCESSING METHOD, AND PROGRAM**

(30) Priority: 26.12.2023 JP 2023219247
(71) Applicant: Sony Group Corporation, Tokyo 108-0075 (JP)
(72) Inventor: SAZUKA, Naoya, Tokyo 108-0075 (JP); KATSUMATA, Koki, Tokyo 108-0075 (JP); KOMORIYA, Yota, Tokyo 108-0075 (JP)
(74) Representative: D Young & Co LLP
(86) International application number: PCT/JP2024/043355
(87) International publication number: WO 2025/142420

(57) **Abstract**

The present technology relates to an information processing apparatus, an information processing method, and a program that enable presentation of more detailed information related to compatibility between users. An information processing apparatus of one aspect of the present technology estimates, based on biometric data measured during consumption of content, an internal state of a person subjected to a measurement of the biometric data, calculates compatibility between persons, based on time-series data indicating the internal state in a specific interval of the entire content, and presents a determination result of the compatibility including information related to the specific interval. The present technology is applicable to a system that provides a service used by a large number of users, such as several tens or several hundreds of users, who search for a person(s) with good compatibility with themselves, for example.

## Description

### Technical Field

The present technology relates to an information processing apparatus, an information processing method, and a program, and particularly relates to an information processing apparatus, an information processing method, and a program that enable presentation of more detailed information related to compatibility between users.

### Background Art

There is a technology of estimating emotion that represents an inner state of a person, based on biometric data such as brain waves. There is a technology of determining compatibility between persons, based on estimated emotion (PTL 1). A determination result of the compatibility is transmitted to an electronic device used by each user, and is presented to the user.

### Citation List

### Patent Literature

PTL 1: WO 2022/209499

### Summary

### Technical Problem

By simply determining a person with similar emotion as a person with good compatibility and presenting this, reasons why the compatibility is good are abstract and unpersuasive.

The present technology has been made in view of such circumstances, and is intended to present more detailed information related to compatibility between users.

### Solution to Problem

An information processing apparatus of one aspect of the present technology includes an estimation unit configured to estimate, based on biometric data measured during consumption of content, an internal state of a person subjected to a measurement of the biometric data, a compatibility calculation unit configured to calculate compatibility between persons, based on time-series data indicating the internal state in a specific interval of the entire content, and a presentation control unit configured to present a determination result of the compatibility including information related to the specific interval.

In one aspect of the present technology, an internal state of a person subjected to a measurement of biometric data is estimated based on the biometric data measured during consumption of content, compatibility between persons is calculated based on time-series data indicating the internal state in a specific interval of the entire content, and a determination result of the compatibility including information related to the specific interval is presented.

### Brief Description of Drawings

[Fig. 1] Fig. 1 is a diagram illustrating a flow of a series of processing in a compatibility information providing system.
[Fig. 2] Fig. 2 is a diagram illustrating an example of a change in an internal state.
[Fig. 3] Fig. 3 is a diagram illustrating an example of calculation of compatibility.
[Fig. 4] Fig. 4 is a diagram illustrating an example of feedback on compatibility.
[Fig. 5] Fig. 5 is a diagram illustrating another example of calculation of compatibility.
[Fig. 6] Fig. 6 is a diagram illustrating an example of feedback on compatibility.
[Fig. 7] Fig. 7 is a diagram illustrating an example of feedback when there is group compatibility information.
[Fig. 8] Fig. 8 is a diagram illustrating another example of feedback when there is group compatibility information.
[Fig. 9] Fig. 9 is a diagram illustrating an example of presenting compatibility.
[Fig. 10] Fig. 10 is another diagram illustrating an example of presenting compatibility.
[Fig. 11] Fig. 11 is another diagram illustrating an example of presenting compatibility.
[Fig. 12] Fig. 12 is another diagram illustrating an example of presenting compatibility.
[Fig. 13] Fig. 13 is a block diagram illustrating a configuration example of the compatibility information providing system.
[Fig. 14] Fig. 14 is a flowchart illustrating processing of an information processing apparatus for presenting compatibility between two users.
[Fig. 15] Fig. 15 is a flowchart illustrating processing of the information processing apparatus for presenting a ranking of compatibility between two users.
[Fig. 16] Fig. 16 is a diagram illustrating an example of a matrix.
[Fig. 17] Fig. 17 is a block diagram illustrating a configuration example of the compatibility information providing system.
[Fig. 18] Fig. 18 is a diagram illustrating an example of earphones equipped with biometric sensors.
[Fig. 19] Fig. 19 is a diagram illustrating an example of a head-mounted display equipped with biometric sensors.
[Fig. 20] Fig. 20 is a diagram illustrating an example of a headband equipped with biometric sensors.
[Fig. 21] Fig. 21 is a diagram illustrating an example of headphones equipped with biometric sensors.
[Fig. 22] Fig. 22 is a diagram illustrating an example of an earphone equipped with biometric sensors.
[Fig. 23] Fig. 23 is a diagram illustrating an example of a watch-type device equipped with biometric sensors.
[Fig. 24] Fig. 24 is a diagram illustrating an example of an eyeglass-type device equipped with biometric sensors.
[Fig. 25] Fig. 25 is a block diagram illustrating a configuration example of a computer.

### Description of Embodiments

Hereinafter, embodiments for implementing the present technology will be described. The description will be made in the following order.
1. Flow of Processing in Compatibility Information Providing System
2. Details of Compatibility Calculation
3. Examples of UIs
4. System Configuration
5. Operation of Information Processing Apparatus
6. Modifications

### Flow of Processing in Compatibility Information Providing System

In a compatibility information providing system according to one embodiment of the present technology, a service is provided in which compatibility between persons being users of the system is calculated and is presented to each user. For example, the service is used in groups of a large number of users, such as several tens or several hundreds of users, who search for a person(s) with good compatibility with themselves. The service may be used by two persons who desire to check their own compatibility.

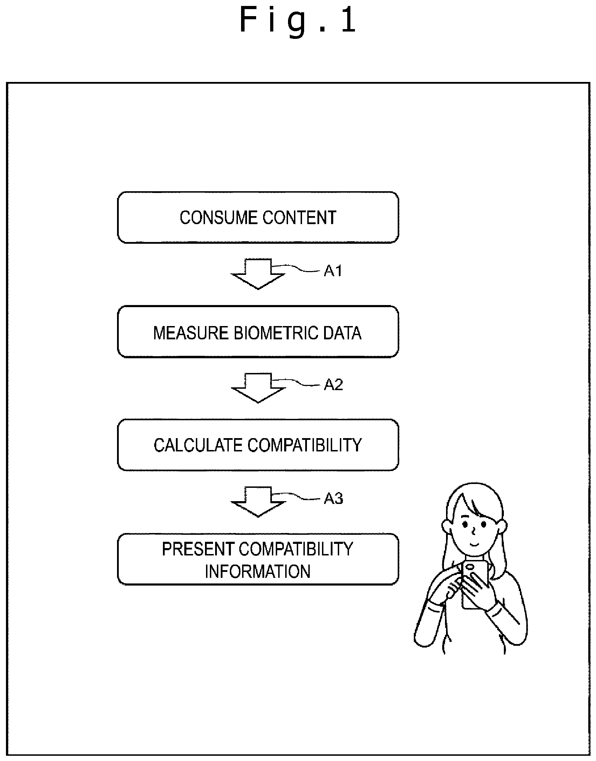

Fig. 1 is a diagram illustrating a flow of a series of processing in the compatibility information providing system.

As illustrated in the upper part of Fig. 1, all users using the service first consume the same content. For example, content having a certain playback time, such as video content including a movie or a television program, and music content, is provided to the users. When the content provided to the users is a movie, the users using the service gather in a movie theater, for example, and all the users watch the same movie.

When the content consumed by the users is the same content, the content may be consumed at different locations, or may be consumed at different timings.

A device common to a plurality of users, such as equipment in a movie theater, may be used for consuming the content, or a device different for each user may be used. When a device different for each user is used, a user terminal, such as a smartphone, of each of the users is used for consuming the content.

As indicated by the tip of an arrow A1 of Fig. 1, biometric data of the users is measured during consumption of the content. Each of the users consumes the content, such as a movie, while wearing one or a plurality of biometric sensors.

As the biometric sensor, a contact-type sensor worn by the users may be used, or a non-contact-type sensor may be used. For example, biometric data such as brain waves, heart rate, respiratory rate, perspiration, pulse waves, electrocardiogram, blood flow, skin temperature, facial muscle potential, and eye potential is measured. One type of biometric data may be measured, or a plurality of types of biometric data may be measured. Images capturing facial expressions and audio may be measured as the biometric data by using a camera and a microphone as the biometric sensors.

The biometric data of each of the users during consumption of the content is transmitted to an information processing apparatus, such as a PC, that is prepared as an apparatus for compatibility calculation. Another device, such as a smartphone or a tablet terminal, may be used as an apparatus for compatibility calculation.

As indicated by the tip of an arrow A2 of Fig. 1, compatibility between the users is calculated by the information processing apparatus, based on the biometric data of each of the users during consumption of the content. In the information processing apparatus, for example, an internal state of each user during consumption of the content is estimated based on the biometric data, and compatibility between the users is calculated based on a change in the estimated internal state.

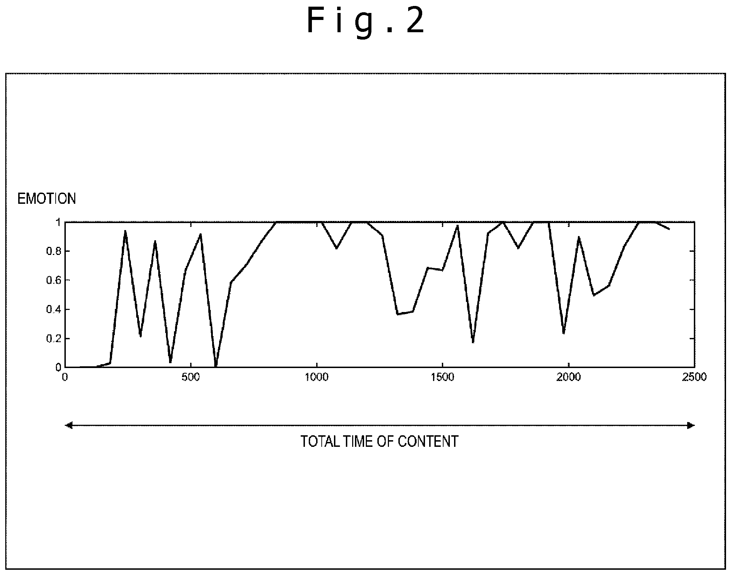

Fig. 2 is a diagram illustrating an example of the change in the internal state.

The horizontal axis of Fig. 2 represents time, and the vertical axis represents emotion. The emotion is the internal state represented by a degree of alertness, a degree of comfort/discomfort, or the like. Information other than the emotion that can be specified based on the biometric data may be used as information indicating the internal state. An interval between times 0 and 2500 indicated by a double-headed arrow corresponds to the total playback time of the content. In this manner, the internal state of a user during consumption of the content is represented as time-series data of the emotion or the like that is synchronized with the content.

The compatibility between the users is calculated based on the change in the internal state of each user represented by the time-series data as illustrated in Fig. 2. For example, a correlation value of the internal states or the like is calculated, and compatibility between all the users is calculated.

When calculation of the compatibility ends, as indicated by the tip of an arrow A3 of Fig. 1, compatibility information which is information of the compatibility between the users is presented to each user. Each user checks the compatibility information by using their own terminal such as a smartphone. For example, an application that performs communication with the information processing apparatus for compatibility calculation and presents the compatibility information based on information transmitted from the information processing apparatus is installed in the user terminal used by each user.

In this manner, in the compatibility information providing system, the compatibility between the users is calculated based on the time-series data indicating the internal states of the users during consumption of the content, and is presented to each user.

### Details of Compatibility Calculation

### Compatibility Calculation Example 1 (Example of Specifying Compatibility in Specific Time Domain and Type of the Compatibility)

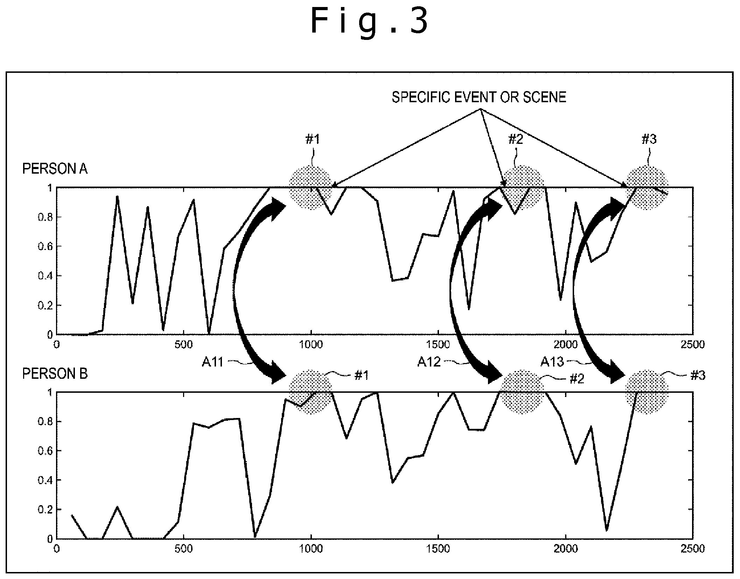

Fig. 3 is a diagram illustrating an example of calculation of compatibility.

The upper part of Fig. 3 illustrates the time-series data of the internal state for User A (Person A), and the lower part illustrates the time-series data of the internal state of User B (Person B). Fig. 3 illustrates an example of a case of calculating compatibility between User A and User B. User A and User B are users who have consumed the same content such as a movie. A tag being attribute information indicating details of the content in the interval is set for each interval of the content of the movie.

When the content is a movie or a game, a tag indicating a type of event or scene, such as romance, action, or horror, is set for each interval. A tag indicating a character, such as a fictional character and an actor, is set. The tag set for each interval at least includes information indicating a time period of the interval, together with the information indicating the details of the interval, such as the type of event or scene and a name of the character.

In the example of Fig. 3, the intervals indicated by colored circle #1, circle #2, and circle #3 are intervals of specific events or scenes. The intervals of circle #1, circle #2, and circle #3 indicated above the time-series data of the internal state of User A and the intervals of circle #1, circle #2, and circle #3 indicated above the time-series data of the internal state of User B are intervals in the same time domain. The intervals indicated by circle #1, circle #2, and circle #3 are intervals of events or scenes related to romance, for example.

As indicated by double-headed arrows A11 to A13, calculation of the compatibility between User A and User B is performed by comparing the changes in the internal states in the intervals of the specific events or scenes. In other words, calculation of the compatibility is performed based not on the changes in the internal states in the interval of the entire content but on the changes in the internal states in partial intervals. For example, the changes in the internal states in intervals of events or scenes to be used as the basis for calculating the compatibility are selected before the compatibility is calculated.

In the present example, the intervals used for comparison of the changes in the internal states are the intervals of events or scenes related to romance. It can be said that the compatibility calculated based on the changes in the internal states in the intervals of the events or the scenes related to romance is the compatibility related to the changes in the internal states of User A and User B for the events or the scenes related to romance. The information indicating the details of the intervals used for calculation of the compatibility is fed back (presented) to the users together with information such as a numerical value indicating a degree of the compatibility.

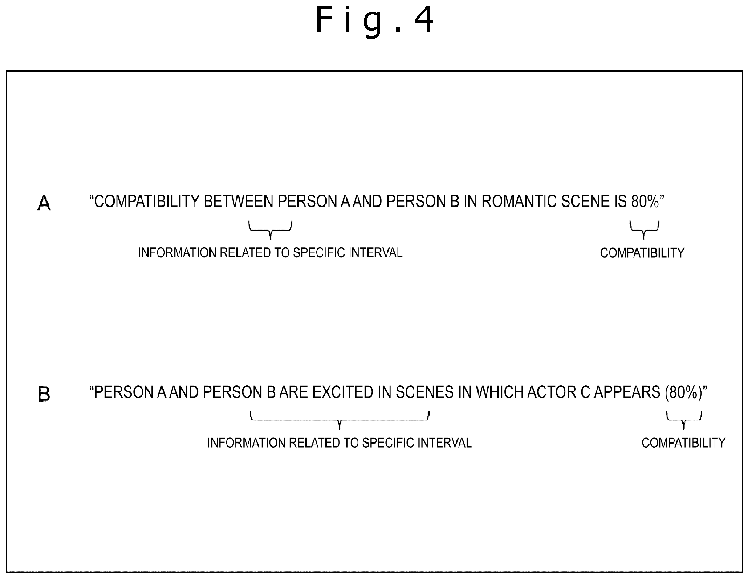

Fig. 4 is a diagram illustrating an example of feedback on compatibility.

When the compatibility between User A and User B is calculated based on the changes in the internal states in the intervals of events or scenes related to romance, as illustrated in A of Fig. 4, a message such as "compatibility between Person A and Person B in scenes of romance is 80%" is presented to User A and User B. "Romance" in the message illustrated in A of Fig. 4 is the information related to the details of the intervals used for calculation of the compatibility, and "80%" is the information indicating the degree of the compatibility. User A and User B can check that the type of compatibility of "80%" is "romance".

A message illustrated in B of Fig. 4 is a message fed back when selection is made to calculate the compatibility based on the changes in the internal states in intervals of scenes in which actor C appears. "Scenes in which actor C appears" in the message "Person A and Person B are excited in scenes in which actor C appears (80%)" illustrated in B of Fig. 4 is the information related to the details of the intervals used for calculation of the compatibility, and "80%" is the information indicating the degree of the compatibility. User A and User B can check that the type of compatibility of "80%" is "scenes in which actor C appears".

Note that whether the degree of the compatibility of "80%" is high or low may be determined based on a set threshold, or may be determined based on group compatibility information to be described later. When there is group compatibility information, pairs whose compatibility falls within the top predetermined percentage range are determined as pairs with high compatibility.

In this manner, in the compatibility information providing system, the internal states, such as emotion, of the users subjected to a measurement of biometric data are estimated based on the biometric data measured during consumption of the content. The compatibility between the users is calculated based on the time-series data indicating the internal states in partial specific intervals of the entire content, and the calculated compatibility is presented as a determination result of the compatibility together with information related to the specific intervals. By specifying the type of the compatibility and presenting it together with information such as a numerical value indicating the compatibility, the details of the compatibility can be recognized, and the compatibility can be presented in a more persuasive manner.

When the content consumed by the users is music, a tag indicating a type of part, such as which song number in a concert, which song number in a playlist, an introduction part, or a chorus part, is set. When User A and User B become excited by the same song while consuming content of a certain concert, a message such as "compatibility between Person A and Person B for song oo is 80%" is fed back. When User A and User B become excited by the same chorus part, a message such as "compatibility between Person A and Person B for the chorus part is 80%" is fed back.

Although the above describes that the degree of the compatibility is represented by a numerical value, the degree may be represented by using an expression such as "good/poor" or "high/low". "Good/poor" or "high/low" of the compatibility is selected by comparing a value indicating the compatibility and a threshold.

### Compatibility Calculation Example 2 (Example of Calculating Compatibility with Intervals of Gaze Points of Specific User Being Used as Reference)

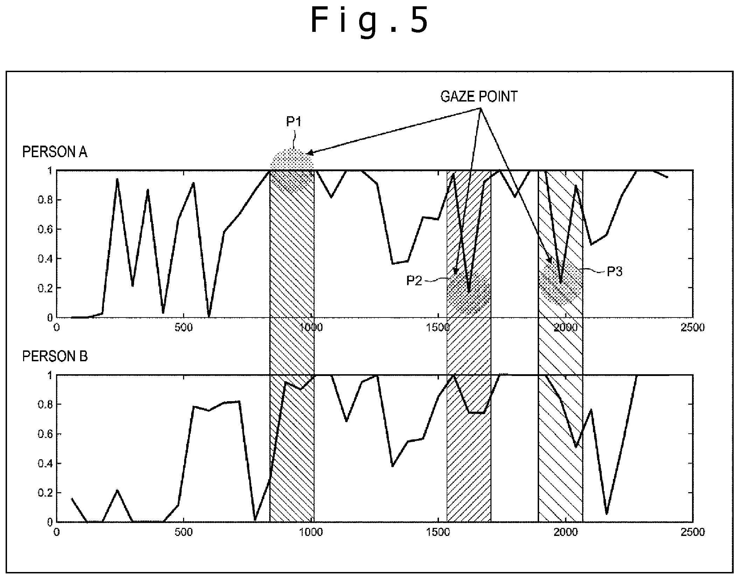

Fig. 5 is a diagram illustrating another example of calculation of compatibility.

The upper part of Fig. 5 illustrates the time-series data of the internal state of User A, and the lower part illustrates the time-series data of the internal state of User B. Description overlapping the above description will be omitted as appropriate.

In the example of Fig. 5, gaze points P1, P2, and P3 are selected based on the time-series data of the internal state of User A. For example, intervals indicating changes satisfying predetermined conditions, such as an interval in which a high value equal to or greater than a threshold is continuously calculated as a value indicating the internal state or an interval in which a difference equal to or greater than a threshold is calculated, are selected as the gaze points P1, P2, and P3. The intervals selected as described above are intervals in which User A reacted to the content, and are estimated as intervals in which User A gazed. At least one interval of the interval in which a high value equal to or greater than a threshold is continuously calculated as a value indicating the internal state or the interval in which a difference equal to or greater than a threshold is calculated may be selected as the gaze point.

Calculation of the compatibility between User A and User B is performed by comparing the changes in the internal states in the intervals of the gaze points. In the present example as well, calculation of the compatibility is performed based not on the changes in the internal states in the interval of the entire content but on the changes in the internal states in the intervals of the gaze points being partial specific intervals.

For example, it can be said that the interval of the gaze point P1 is an interval in which a value such as a degree of alertness indicating the internal state of User A is continuously high, and is an interval in which User A is focused on the content. When the compatibility between User A and User B is calculated as "90%", which is very high, based on the changes in the internal states in the interval of the gaze point P1, feedback to User B includes information indicating that it is an interval in which User A is focused on the content, together with information such as a numerical value indicating a degree of the compatibility.

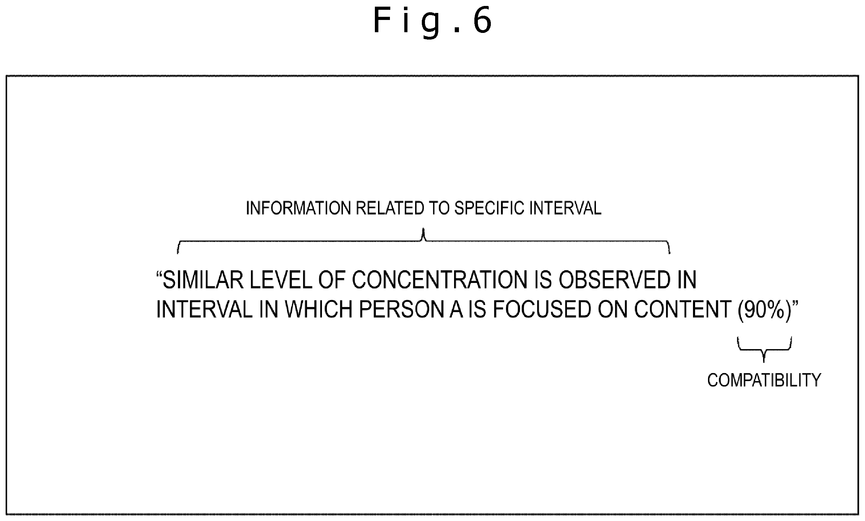

Fig. 6 is a diagram illustrating an example of feedback on compatibility.

When the compatibility between User A and User B is calculated as "90%" based on the changes in the internal states in the interval of the gaze point P1, as illustrated in Fig. 6, a message such as "A similar level of concentration is observed during the interval in which Person A is focused on the content (90%) " is presented to User B. "Interval in which Person A is focused on the content" in the message illustrated in Fig. 6 is the information related to the interval used for calculation of the compatibility, and "90%" is the information indicating the degree of the compatibility. User B can check that the compatibility of "90%" is calculated because User B was focused on the content in the same manner as Person A.

Similarly, information indicating a level of compatibility in each of the gaze points, such as the compatibility being very high in the interval of the gaze point P2 and the compatibility being intermediate in the interval of the gaze point P3, may be fed back to User B.

In this manner, one user is selected as a reference user out of a user group of two or more people (User A and User B in the example of Fig. 5), and the gaze points are selected based on the time-series data of the internal state of the selected one user. Compatibility with another user is calculated with reactions of the selected one user in the intervals of the gaze points being used as a reference. By calculating the compatibility at the gaze points where one user exhibited characteristic reactions, the details of the compatibility can be specified and can be fed back.

By using the reactions in the intervals of the gaze points of one user as a reference, operation of setting tags to the content becomes unnecessary, and compatibility calculation using the time-series data of the internal state in partial intervals can be easily performed.

### Example 1 of Utilizing Group Compatibility Information (Example of Objectively Comparing Levels of Compatibility with Other Pairs)

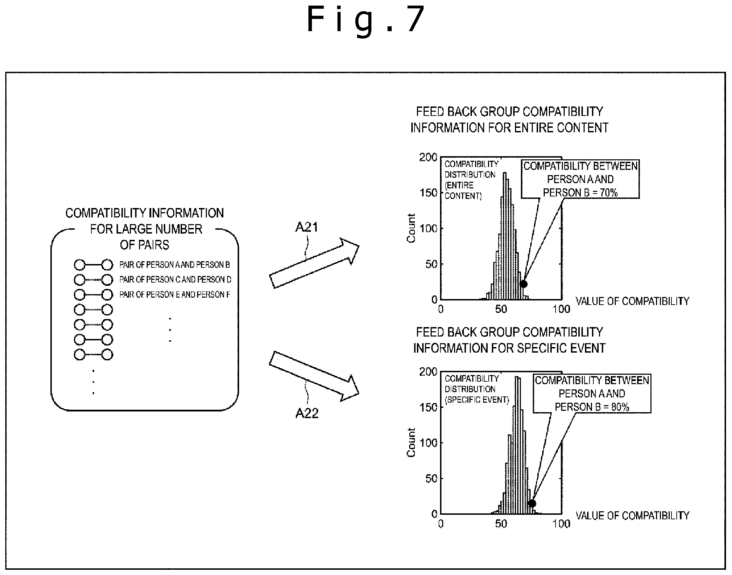

Fig. 7 is a diagram illustrating an example of feedback when there is group compatibility information.

Here, as illustrated on the left side of Fig. 7, there is information on compatibility for a large number of pairs belonging to a group, such as compatibility between User A and User B, compatibility between User C and User D, compatibility between User E and User F, and so on. The compatibility of each pair is calculated by comparing the changes in the internal states during consumption of content, as described above.

In this case, as illustrated on the right side of Fig. 7, feedback can be performed by presenting the position of the compatibility of each pair in compatibility distributions each being a distribution of the compatibility of all the pairs in the group. The horizontal axis of the compatibility distributions illustrated on the right side of Fig. 7 represents a value of compatibility, and the vertical axis represents frequency (the number of pairs). The compatibility distributions are calculated by aggregating the compatibility of respective pairs included in the group compatibility information.

### - Example of Feeding Back Group Compatibility Information for Entire Content

The compatibility distribution indicated by the tip of an arrow A21 is a distribution of compatibility calculated by comparing the changes in the internal states in the time domain of the entire content. In other words, the compatibility distribution indicated by the tip of the arrow A21 is a distribution of compatibility when a calculation different from the calculation of compatibility described with reference to Fig. 3 and Fig. 5 is performed.

When the compatibility between User A and User B, based on a comparison of the changes in the internal states over the entire content, is calculated as "70%", for example, feedback using the compatibility distribution is performed as follows.

Ranking information: "Compatibility of 70% between Person A and Person B ranks 50th overall."

Distribution information: "Compatibility of 70% between Person A and Person B falls within the top 10% in terms of compatibility."

Not only the messages but also a graph indicating the compatibility distribution may be fed back.

By feeding back top results of the compatibility not only to User A and User B but also to other pairs, competition among the pairs can be encouraged. For example, a message such as "there are oo pairs whose compatibility is higher than your pair" is fed back to User C and User D being users of another pair.

### - Example of Feeding Back Group Compatibility Information for Specific Event or Scene of Content

The compatibility distribution indicated by the tip of an arrow A22 of Fig. 7 is a distribution of compatibility calculated by comparing the changes in the internal states in intervals of scenes of romance, for example, of the entire content. In other words, the compatibility distribution indicated by the tip of the arrow A22 is a distribution when the same calculation as the calculation of compatibility described with reference to Fig. 3 and Fig. 5 is performed.

When the compatibility between User A and User B, based on a comparison of the changes in the internal states in intervals of scenes of romance is calculated as "80%", for example, feedback using the compatibility distribution is performed as follows.

Ranking information: "Romance compatibility of 80% between Person A and Person B ranks 40th overall."

Distribution information: "Romance compatibility of 80% between Person A and Person B falls within the top 10% in terms of compatibility."

This ranking information and distribution information are based on the compatibility of the plurality of pairs belonging to the same group as the group to which Person A and Person B belong.

Not only the messages but also a graph indicating the compatibility distribution may be fed back. The graph indicating the compatibility distribution is information related to the compatibility of the plurality of pairs belonging to the same group as the group to which Person A and Person B belong.

In this case as well, top results of the compatibility may be fed back not only to User A and User B but also to the users of other pairs. For example, information such as "there are oo pairs whose romance compatibility is higher than your pair" is fed back to User C and User D being users of another pair.

### Example 2 of Utilizing Group Compatibility Information (Example of Searching for Person with High Compatibility in Group)

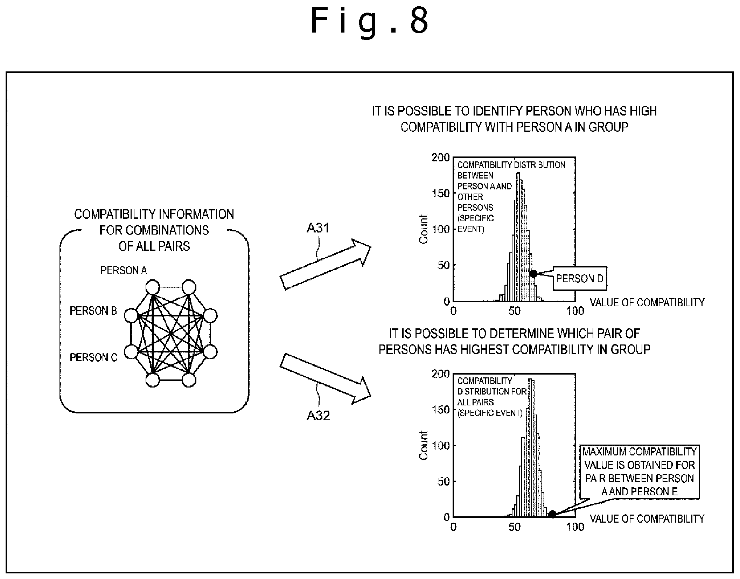

Fig. 8 is a diagram illustrating another example of feedback when there is group compatibility information. Description overlapping the description of Fig. 7 will be omitted as appropriate.

Here, as illustrated on the left side of Fig. 8, there is information on compatibility of combinations of all pairs of a large number of users who have consumed the same content. When the number of users is N, the number of combinations of all the pairs is represented by _{N}C₂. The compatibility of each of the _{N}C₂ pairs is calculated by comparing the changes in the internal states during consumption of the content, as described above.

In this case, as illustrated on the right side of Fig. 8, feedback can be performed by presenting the position of the compatibility of each pair in compatibility distributions for the combinations of all the pairs.

### - Example of Feeding Back Information of Person with Good Compatibility with Specific User in Group

The compatibility distribution indicated by the tip of an arrow A31 is a distribution indicating compatibility between User A and each of all the other users, which is calculated by comparing the changes in the internal states in intervals of specific events or scenes of the entire content.

When User D is present as a person with good compatibility with User A and the compatibility between User A and User D is calculated as "70%", for example, feedback using the compatibility distribution is performed for User A as follows.

"Compatibility between Person A and Person D in scenes of romance is 70%. This is high compatibility that falls within the top 10% in the group."

When User E is specified as a person with the highest compatibility with User A, for example, the following feedback is performed for User A.

"Person with the highest compatibility with Person A in scenes of romance in the group is Person E."

Not only the messages but also a graph indicating the compatibility distribution may be fed back. The graph indicating the compatibility distribution is information related to the compatibility between Person A and each of all the other users belonging to the same group as the group to which Person A belongs.

### - Example of Feeding Back Which Pair of Persons Has Highest Compatibility in Group

The compatibility distribution indicated by the tip of an arrow A32 is a distribution indicating compatibility of all the pairs, which is calculated by comparing the changes in the internal states in intervals of specific events or scenes of the entire content.

When the pair with the highest compatibility in comparing the changes in the internal states in intervals of scenes of romance is a pair of User A and User E, for example, feedback using the compatibility distribution is performed as follows.

"Compatibility between Person A and Person E in scenes of romance is the highest in the group."

Such feedback may be performed only for User A and User E, or may be performed for all the users.

In this manner, when feedback using the compatibility distribution is performed, each of the users can check the position of compatibility between the user and another user in the group.

### Examples of UIs

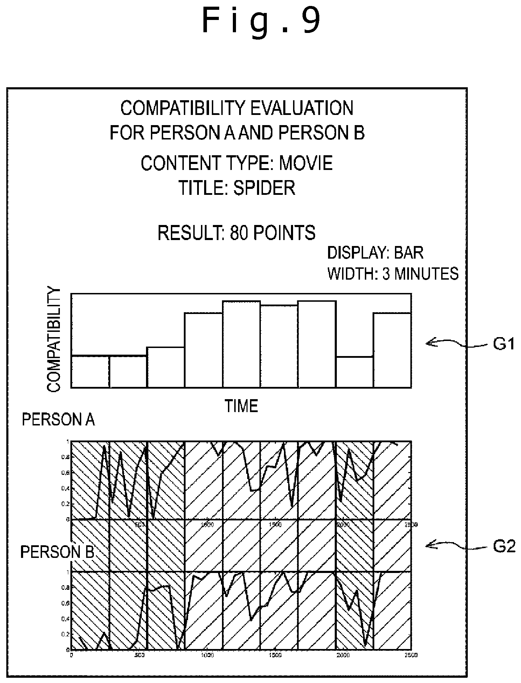

UIs used to present compatibility of a certain pair will be described. Here, a case of presenting the compatibility between User A and User B calculated by comparing the changes in the internal states when they consume the same movie will be described. Screens as illustrated in Fig. 9 to Fig. 12 are displayed in the user terminals of User A and User B, for example.

### Example 1 of Presenting Compatibility

Fig. 9 is a diagram illustrating an example of presenting compatibility.

In the example of Fig. 9, the compatibility between User A and User B calculated by comparing the changes in the internal states when they consume the same movie is displayed as "80 points".

A graph G1 displayed substantially at the center of the screen is a graph indicating a time series of the compatibility between User A and User B. The horizontal axis represents time. The compatibility in each time period, such as every three minutes, is displayed using bars. The time series of the compatibility may be displayed using a line graph instead of the graph using bars. The time series of the compatibility may be displayed using numerical values such as continuous values.

A graph G2 displayed in a lower part of the screen is a graph indicating the changes in the internal states of User A and User B. In the graph G2, each time period, such as every three minutes, is displayed in colors according to the degree of the compatibility between User A and User B in the time period. In Fig. 9, different types of hatching in the time periods of the graph G2 indicate that the colors used for the display of the time periods are different.

For example, a time period with a high degree of compatibility is displayed in blue, and a time period with a low degree of compatibility is displayed in red. The degrees of compatibility may be represented by shades of one color. For example, a time period with a high degree of compatibility is displayed in a dark color, and a time period with a low degree of compatibility is displayed in a light color.

One interval (time domain) in the graph G1 and one interval in the graph G2 may be displayed as different time intervals, instead of the same time intervals. The compatibility in partial intervals may be displayed as illustrated in Fig. 9, instead of the compatibility in time of the entire content.

### Example 2 of Presenting Compatibility

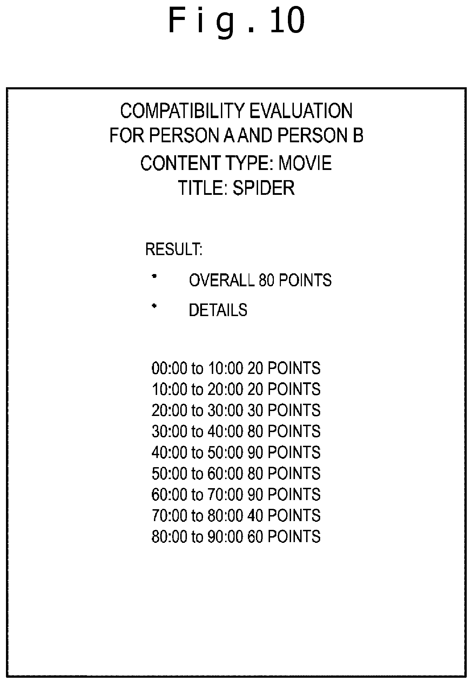

Fig. 10 is another diagram illustrating an example of presenting compatibility.

The screen illustrated in Fig. 10 is a screen on which the compatibility in each time period, such as every 10 minutes, is displayed using numerical values. In this manner, the compatibility in each time period may be presented using numerical values.

### Example 3 of Presenting Compatibility

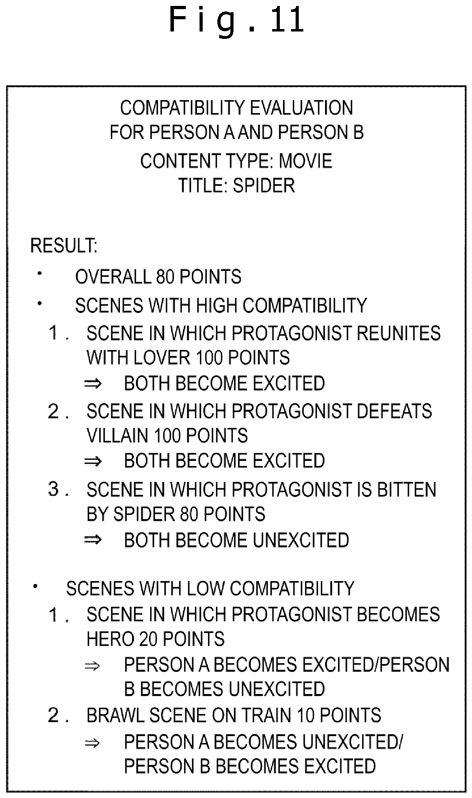

Fig. 11 is another diagram illustrating an example of presenting compatibility.

The screen illustrated in Fig. 11 is a screen on which the compatibility in respective scenes are displayed separately for scenes with high compatibility and scenes with low compatibility. In the example of Fig. 11, as the scenes with high compatibility, a scene in which a protagonist reunites with their lover, a scene in which a protagonist defeats a villain, and a scene in which a protagonist is bitten by a spider are presented. The compatibility in the scenes are 100 points, 100 points, and 80 points, respectively. The details of the scenes are specified based on information of tags set for the content, for example. In this manner, the details of the scenes may be displayed using the information of the tags together with the compatibility.

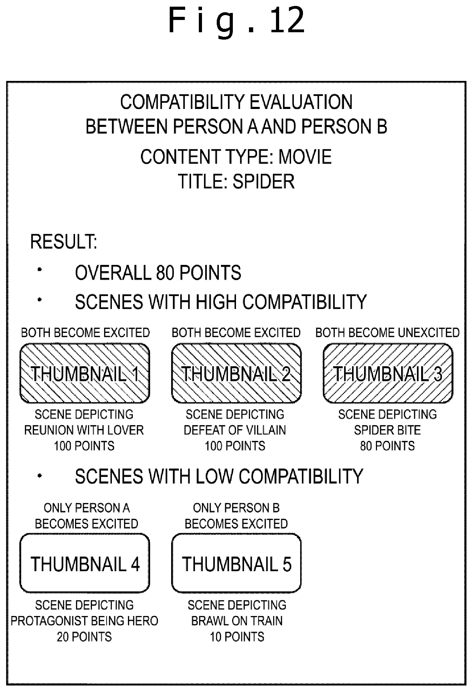

As illustrated in Fig. 12, the details of the scenes may be displayed using not only text but also thumbnail images. In this manner, User A and User B can intuitively check in which scenes the compatibility with the other person was good/poor.

### System Configuration

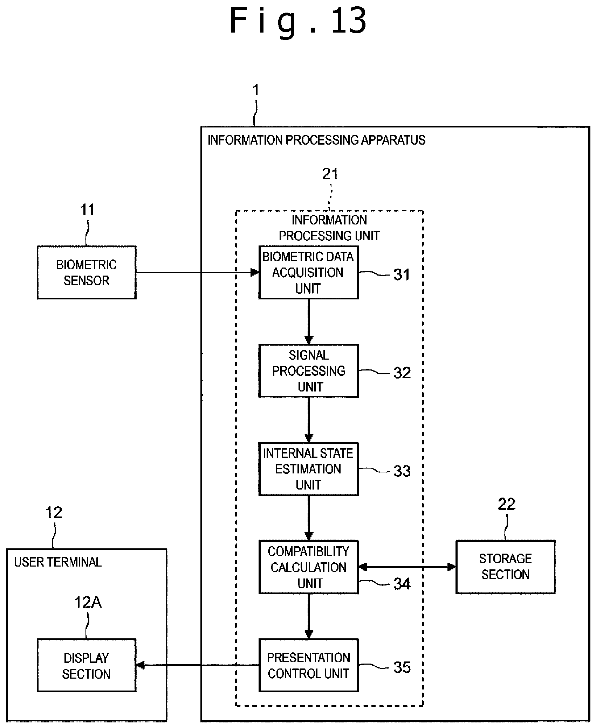

Fig. 13 is a block diagram illustrating a configuration example of the compatibility information providing system.

As illustrated in Fig. 13, the compatibility information providing system includes an information processing apparatus 1, a biometric sensor 11, and a user terminal 12. The information processing apparatus 1 and the biometric sensor 11, and the information processing apparatus 1 and the user terminal 12, are each connected to each other via a network such as a LAN or the Internet. Various types of information are transmitted and received between the apparatuses by wireless or wired communication. The biometric sensor 11 and the user terminal 12 are devices used by the users of the service provided by the compatibility information providing system. As many biometric sensors 11 and as many user terminals 12 as the number of users are provided, for example.

The information processing apparatus 1 configured by a PC or the like includes an information processing unit 21 and a storage section 22. In the information processing unit 21 configured by a CPU or the like, a biometric data acquisition unit 31, a signal processing unit 32, an internal state estimation unit 33, a compatibility calculation unit 34, and a presentation control unit 35 are realized when a predetermined program is executed.

The biometric data acquisition unit 31 of the information processing unit 21 receives and acquires pieces of biometric data transmitted from the biometric sensors 11. From the biometric sensors 11 used by the users, pieces of biometric data measured by the biometric sensors 11 during consumption of content are transmitted. The pieces of biometric data acquired by the biometric data acquisition unit 31 are pieces of time-series data. The pieces of biometric data acquired by the biometric data acquisition unit 31 are output to the signal processing unit 32.

The signal processing unit 32 performs signal processing as preprocessing, such as analysis processing and noise removal, on the pieces of biometric data supplied from the biometric data acquisition unit 31. The pieces of biometric data after the signal processing are output to the internal state estimation unit 33.

The internal state estimation unit 33 estimates the internal states, including emotion, of the users at each time, based on the pieces of biometric data supplied from the signal processing unit 32. Estimation of the internal states is performed by analyzing the pieces of biometric data or by using a machine learning model. The machine learning model is an inference model that receives input of the pieces of biometric data and outputs values such as emotion indicating the internal states, for example. The inference model generated by performing machine learning is prepared in the internal state estimation unit 33. In the internal state estimation unit 33, for example, the internal states of the users to be subjected to compatibility calculation are estimated. Information indicating the internal states estimated by the internal state estimation unit 33 is output to the compatibility calculation unit 34.

The compatibility calculation unit 34 extracts information to be used for compatibility calculation from the information supplied from the internal state estimation unit 33. The compatibility calculation unit 34 extracts and compares the pieces of time-series data of the internal states in an interval of a specific event or scene, and thereby calculates compatibility between two target users. In the compatibility calculation unit 34, as appropriate, the changes in the internal states for the entire content in the time domain are compared, and calculation of the compatibility is thereby performed.

Here, a method of calculating compatibility will be described.

For example, pieces of time-series data of the internal states of two users to be subjected to compatibility calculation are binarized, and a ratio of the same values is calculated as a value of compatibility.

A correlation value of pieces of time-series data of the internal states of two users to be subjected to compatibility calculation is calculated as a value of compatibility.

A phase shift of pieces of time-series data indicating the internal states of two users to be subjected to compatibility calculation is calculated as a value of compatibility. For example, higher compatibility is calculated as the phase shift is smaller. The phase shift is represented by coherence, for example. Information indicating a degree of the phase shift may be provided to the users as a shift of timings of reactions to the content.

Similarity (distance) of pieces of time-series data of the internal states of two users to be subjected to compatibility calculation is calculated as a value of compatibility. As the distance indicating compatibility, various distances such as Euclidean distance, Manhattan distance, Chebyshev distance, Mahalanobis distance, dynamic time warping (DTW), Hellinger distance, and KL divergence can be used.

Calculation of compatibility may be performed by using a combination of two or more values of the ratio of the same values when pieces of time-series data are binarized, the correlation value of pieces of time-series data, the phase shift, and the distance. At least one of the ratio of the same values when pieces of time-series data are binarized, the correlation value of pieces of time-series data, the phase shift, or the distance can be used for compatibility calculation.

The information of the compatibility calculated by the compatibility calculation unit 34 is output to the storage section 22, and is stored therein. The storage section 22 stores group information including information of the compatibility of a large number of pairs. The compatibility calculation unit 34 reads the information of the compatibility to be presented to the users from the group information, and outputs the information to the presentation control unit 35.

The presentation control unit 35 generates pieces of display data for screens used to present the compatibility as described above, based on the information supplied from the compatibility calculation unit 34. The presentation control unit 35 transmits the pieces of display data to the user terminals 12, and causes the user terminals 12 to present the compatibility to the users. In the user terminals 12, the pieces of display data transmitted from the presentation control unit 35 are received, and the screens including the information of the compatibility are displayed on respective display sections 12A each configured by an LCD display or the like, based on the pieces of received display data.

### Operation of Information Processing Apparatus

### Example of Presenting Compatibility between Two Users

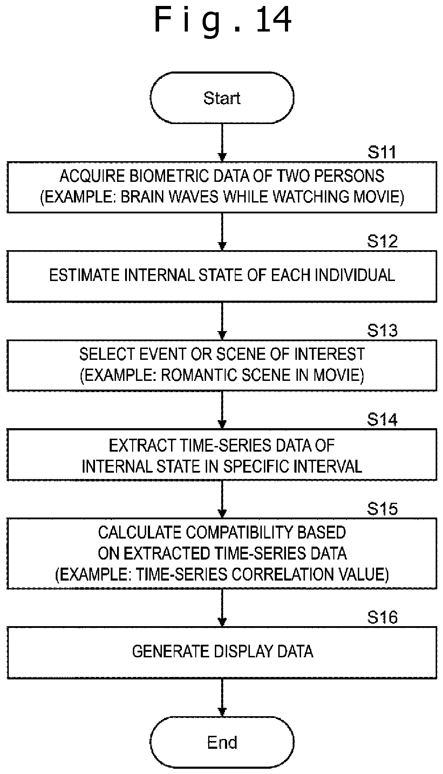

With reference to the flowchart of Fig. 14, processing of the information processing apparatus 1 for presenting compatibility between two users will be described.

In Step S11, the biometric data acquisition unit 31 receives and acquires pieces of biometric data transmitted from the biometric sensors 11. Signal processing as preprocessing, such as analysis processing and noise removal, is performed by the signal processing unit 32 on the pieces of biometric data of two users acquired by the biometric data acquisition unit 31.

In Step S12, the internal state estimation unit 33 estimates the internal states of the two users, based on the pieces of biometric data after the signal processing performed by the signal processing unit 32.

In Step S13, the compatibility calculation unit 34 selects an event or a scene of interest, such as a romantic scene in a movie. For example, an operation of inputting an event or a scene is performed by the users on the user terminals 12, and the event or the scene of interest is selected according to the operation performed by the users. Information indicating details of the operation performed by the users is transmitted from the user terminals 12 to the information processing apparatus 1, and is acquired by the compatibility calculation unit 34.

In Step S14, the compatibility calculation unit 34 extracts pieces of time-series data of the internal states in an interval of the event or the scene selected in Step S13, which is a specific interval. The interval of the event or the scene of interest is specified based on a tag, and pieces of time-series data of the internal states corresponding to the specified interval are extracted from the pieces of time-series data indicating the internal states of the two persons to be subjected to compatibility calculation.

In Step S15, the compatibility calculation unit 34 performs correlation value calculation of the pieces of time-series data extracted in Step S14 or the like, and calculates the compatibility between the two users.

In Step S16, the presentation control unit 35 generates pieces of display data for screens used to present the compatibility, based on the calculation result of the compatibility calculation unit 34. The presentation control unit 35 transmits the pieces of display data to the user terminals 12 of the two users, and causes the user terminals 12 to present the compatibility.

### Example of Presenting Ranking of Compatibility between Two Users in Compatibility Distribution

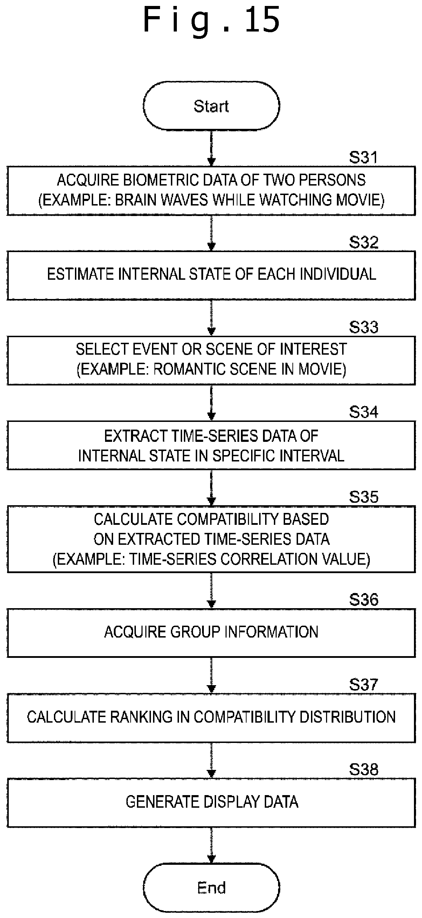

With reference to the flowchart of Fig. 15, processing of the information processing apparatus 1 for presenting a ranking of compatibility between two users will be described. To present a ranking of the compatibility, group information being information on compatibility of a large number of pairs is used.

Processing of Steps S31 to S35 of Fig. 15 is processing similar to the processing of Steps S11 to S15 of Fig. 14. Description overlapping the description of Fig. 14 will be omitted as appropriate. The internal states are estimated based on the pieces of biometric data of the two users to be subjected to compatibility calculation which are transmitted from the biometric sensors 11, and the compatibility between the two users is calculated.

In Step S36, the compatibility calculation unit 34 reads group information from the storage section 22, and acquires information on compatibility of other pairs. The storage section 22 stores the group information including the information on the compatibility of the pairs calculated based on pieces of biometric data of a large number of users. The compatibility calculation unit 34 generates a compatibility distribution, based on the compatibility calculated in Step S35 and the compatibility of other pairs represented by the information acquired from the group information.

In Step S37, the compatibility calculation unit 34 calculates a ranking of the compatibility, such as the rank of the compatibility between the two users to be subjected to compatibility calculation from the top. By specifying the position of the compatibility between the two users to be subjected to compatibility calculation in the compatibility distribution, the ranking of the compatibility is calculated.

In Step S38, the presentation control unit 35 generates pieces of display data for screens used to present the compatibility, based on the calculation result of the compatibility calculation unit 34. Here, pieces of display data including the information of the ranking of the compatibility between the two users to be subjected to compatibility calculation are generated. The presentation control unit 35 transmits the pieces of display data to the user terminals 12 of the two users, and causes the user terminals 12 to present the compatibility.

As described above, by specifying the details of the content as the type of compatibility and presenting them together with information such as a numerical value indicating the compatibility, the information processing apparatus 1 can present the compatibility in a more persuasive manner.

By using the group information, the information processing apparatus 1 can present not only a reason for the compatibility but also information of the compatibility between the users in the group. The users can objectively compare the presented compatibility with the compatibility between other users in the group. By making a comparison with the compatibility between other users in the group or checking with whom they have good compatibility, the users can further increase a probability of establishing human relationships that are suitable for themselves.

The service using the compatibility information providing system can also be used as a service of entertainment or the like.

### Modifications

### Marketing Application Examples

The information of the compatibility calculated as described above can be used for marketing. Information related to other content that is associated with the content consumed to know the compatibility and the like is presented to the users as marketing information. Display data including the marketing information is generated by the presentation control unit 35, for example, and is presented to the users.

### - Marketing Example 1

Feedback on the compatibility such as "compatibility between Person A and Person B in scenes of romance is 80%" or "compatibility between Person A and Person B for music is 80%" is performed as described above. In this case, a message such as "another work '... ' is recommended to the pair of Person A and Person B" is subsequently displayed, and information of other content in the same genre is presented as the marketing information. Other content presented as the marketing information is selected as appropriate, based on evaluations of viewing histories.

### - Marketing Example 2

Feedback on the compatibility such as "Person A and Person B are excited in scenes in which actor C appears (80%)" is performed as described above. In this case, a message such as "another work '...' is recommended to the pair of Person A and Person B" is subsequently displayed, and information of other content in which the same actor C appears is presented as the marketing information. Another work in which the actor appears, which similarly has high evaluations from people who give high evaluations to the work in which actor C appears, may be selected based on evaluations of viewing histories, and presented as the marketing information.

### - Marketing Example 3

When there is group compatibility information, the marketing information is presented to the users of pairs with compatibility that fall within the top oo% as described above.

### - Marketing Example 4

When the feedback of the compatibility "compatibility between Person A and Person B in scenes of romance is 80%" is performed as described above, it can be determined that the movie consumed by User A and User B is a movie preferred by couples. In this case, information indicating that the movie consumed by User A and User B is a movie for couples is fed back to a movie production company. Then, it becomes possible to promote the movie by appealing that the movie is for couples.

### - Marketing Example 5

When there is a database of group compatibility information and attribute information of the pair subjected to compatibility calculation (for example, a man and a woman in their twenties, both like action, and both like romance), it is estimated which attribute pairs have high engagement when certain marketing information is presented. Information of a movie and the like are presented to specific pairs having the estimated attributes as the marketing information. In this manner, the group compatibility information can be used for direct marketing.

### Group Compatibility

Group compatibility may be calculated based on compatibility between three or more users, instead of compatibility between two users. A matrix D(M) is used for calculation of group compatibility being compatibility between M people.

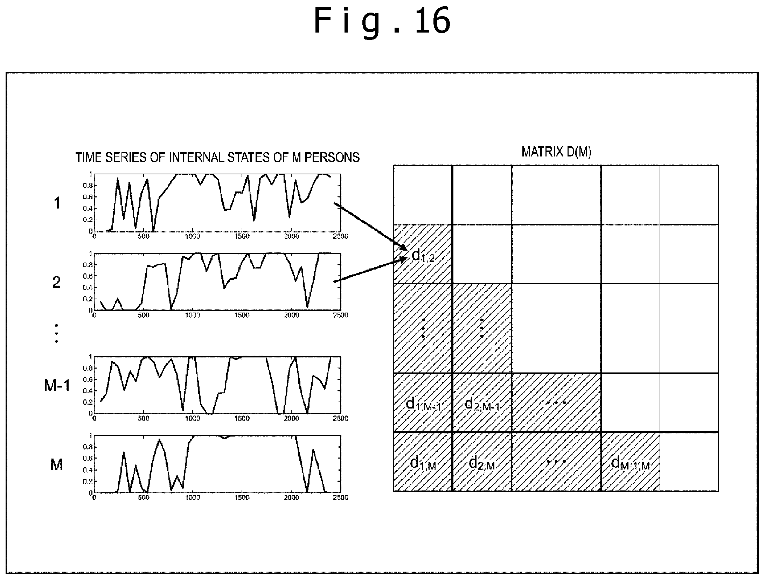

Fig. 16 is a diagram illustrating an example of the matrix D(M).

The matrix D(M) is expressed by the following equation. Matrix D(M) = d_{i,j}

d_{i,j} is compatibility between two users. i and j are indices of users, and are integers satisfying i < j, where they are 1 or greater and M or less ([1, M]). Compatibility d_{1,2} between a user to which an index of i = 1 is set and a user to which an index of j = 2 is set is calculated based on the internal states of the two users as an element of the matrix D(M) as indicated by the tips of arrows of Fig. 16.

Using the matrix D(M), for example, the following values are calculated as the group compatibility.
- the mean or the median of elements of the matrix D(M)
- the mean or the median of absolute values of elements of the matrix D(M)
- the standard deviation or the interquartile range of elements of the matrix D(M)

The matrix D(M) is a lower triangular matrix as illustrated with hatching in Fig. 16. For example, when M = 3, the elements of the matrix D(M) are three elements of d_{1,2}, d_{2,3}, and d_{1,3}. The group compatibility is calculated based on d_{1,2}, d_{2,3}, and d_{1,3}. Information of the group compatibility calculated by the compatibility calculation unit 34 of the information processing apparatus 1 is presented to the users, for example, similarly to the information of compatibility of a pair.

### Modifications of System Configuration

Although the above has mainly described a case in which the information processing apparatus 1 is configured by a PC, the functions of the information processing apparatus 1 may be realized by a server on the Internet.

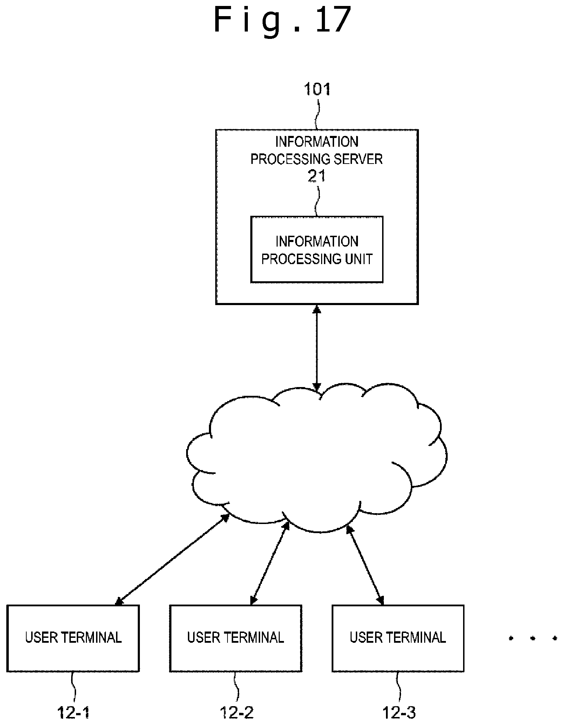

Fig. 17 is a block diagram illustrating a configuration example of the compatibility information providing system.

In the compatibility information providing system illustrated in Fig. 17, an information processing server 101 being a server on the Internet functions as the information processing apparatus for compatibility calculation. The information processing server 101 is provided with the information processing unit 21. The information processing unit 21 of the information processing server 101 has functions similar to the functions described with reference to Fig. 13.

The information processing unit 21 of the information processing server 101 receives and acquires pieces of biometric data transmitted from the user terminals 12 including user terminals 12-1 to 12-3 via the Internet, and calculates compatibility between two users as described above. In the present example, pieces of biometric data measured by the biometric sensors 11 are transmitted to the information processing server 101 by the user terminals 12. Sensors of the user terminals may be used to measure the pieces of biometric data. The information processing unit 21 of the information processing server 101 generates pieces of display data including information of the compatibility, transmits them to the user terminals 12, and causes the user terminals 12 to present them to the users.

In this manner, reception of the pieces of biometric data being sensing data can be performed on the edge side (on the side of the user terminals 12), and calculation of the compatibility can be performed on the side of the server on the Internet (on the cloud).

### Examples of Biometric Sensors

Various devices can be used as a device used to measure biometric data of a user during consumption of content.

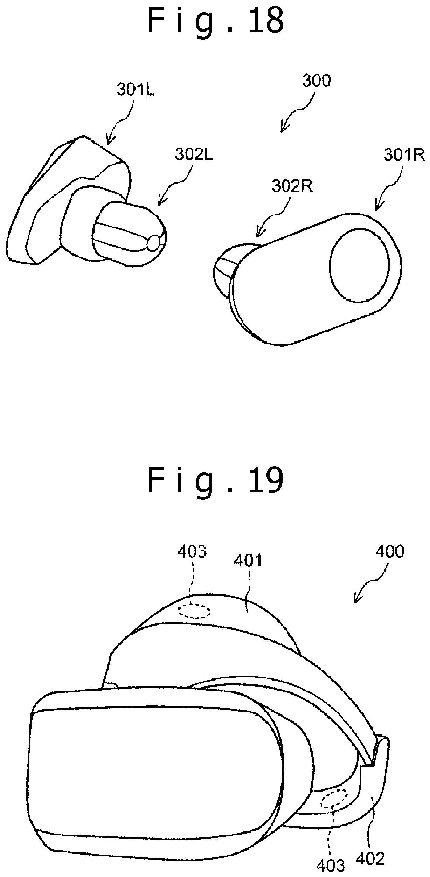

Fig. 18 is a diagram illustrating an example of earphones equipped with biometric sensors.

Wireless earphones 300 as illustrated in Fig. 18 can be equipped with biometric sensors such as an electroencephalogram sensor and a peripheral sensor. An earpiece part 302L of a main body 301L and an earpiece part 302R of a main body 301R are made of a conductive material. When the main body 301L and the main body 301R are worn, the earpiece part 302L and the earpiece part 302R come into contact with the external ears of a user, which serve as electrical contact points with the living body.

The earpiece part 302L and the earpiece part 302R include a plurality of conductor parts, for example. For example, by arranging a first surface of a first conductor part to come into contact with a portion of an inner surface of an external acoustic opening on a parietal side where EEG intensity is relatively high and a second surface of a second conductor part to come into contact with a portion on a neck side where EEG intensity is relatively low, a potential difference between a potential of the portion on the parietal side and a potential of the portion on the neck side can be measured. In this manner, brain waves of the body can be more accurately detected.

As the conductive material constituting the earpiece part 302L and the earpiece part 302R, for example, PEDOT-PSS, polypyrrole, polyacetylene, polyphenylene vinylene, polythiophene, polythiol, and polyaniline can be used. At least one selected from the group consisting of these analogs is used as the conductive material constituting the earpiece part 302L and the earpiece part 302R.

The first conductor part and the second conductor part are made of a polyvinyl chloride resin, a polypropylene resin, a polyethylene resin, a polyurethane resin, a polyacetal resin, a polyamide resin, or a polycarbonate resin, for example. The first conductor part and the second conductor part can be made of at least one thermoplastic resin selected from the group consisting of these copolymers.

### - Modifications of Devices Equipped with Electroencephalogram Sensor and Peripheral Sensor

Fig. 19 is a diagram illustrating an example of a head-mounted display 400 equipped with an electroencephalogram sensor and a peripheral sensor. For example, on inner surfaces of a pad part 401 and a band part 402 or the like of the head-mounted display 400, detection electrodes 403 of the electroencephalogram sensor and the peripheral sensor are provided. The inner surfaces of the pad part 401 and the band part 402 are parts to come into contact with the forehead and near the occipital region of a user wearing the head-mounted display 400, respectively.

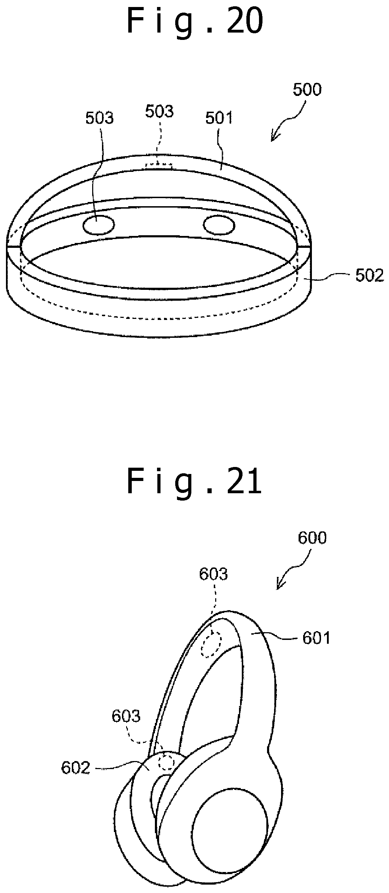

Fig. 20 is a diagram illustrating an example of a headband 500 equipped with an electroencephalogram sensor and a peripheral sensor. For example, on inner surfaces of a band part 501 and a band part 502 or the like of the headband 500, detection electrodes 503 of the electroencephalogram sensor and the peripheral sensor can be provided. The inner surfaces of the band part 501 and the band part 502 are parts to come into contact with the head of a user wearing the headband 500.

Fig. 21 is a diagram illustrating an example of headphones 600 equipped with an electroencephalogram sensor and a peripheral sensor. For example, on an inner surface of a band part 601, ear pads 602, or the like of the headphones 600, detection electrodes 603 of the electroencephalogram sensor and the peripheral sensor are provided. The inner surface of the band part 601 and the ear pads 602 are parts to come into contact with the head and near the ears of a user wearing the headphones 600, respectively.

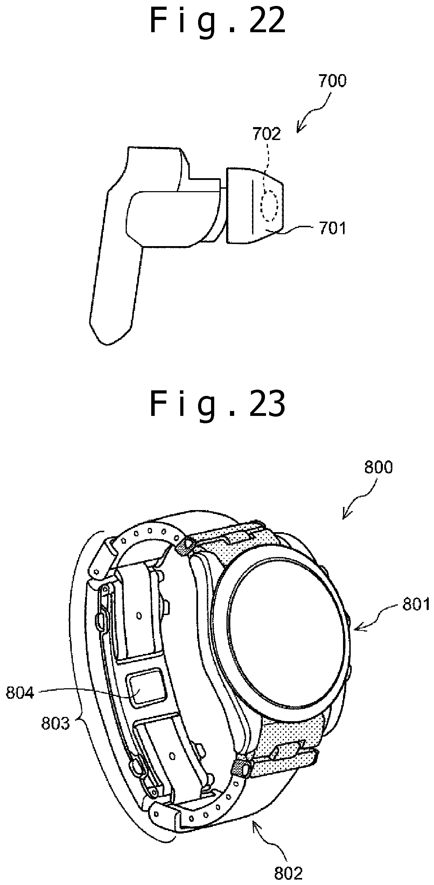

Fig. 22 is a diagram illustrating an example of an earphone 700 equipped with an electroencephalogram sensor and a peripheral sensor. For example, on an earpiece 701 of the earphone 700, a detection electrode 702 of the electroencephalogram sensor and the peripheral sensor is provided.

Fig. 23 is a diagram illustrating an example of a watch-type device 800 equipped with an electroencephalogram sensor and a peripheral sensor. For example, on an inner surface of a display section 801, an inner surface of a band part 802, or the like of the watch-type device 800, detection electrodes 804 of the electroencephalogram sensor and the peripheral sensor are provided. For example, the inner surface of the display section 801 that displays time and the like and the inner surface of the band part 802 (for example, an inner surface of a buckle part 803) are parts to come into contact with the area near the wrist of a user wearing the watch-type device 800, respectively.

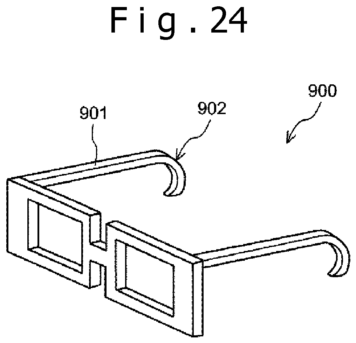

Fig. 24 is a diagram illustrating an example of an eyeglass-type device 900 equipped with an electroencephalogram sensor and a peripheral sensor. On inner surfaces of temples 901 or the like of the eyeglass-type device 900, detection electrodes 902 of the electroencephalogram sensor and the peripheral sensor are provided. The inner surfaces of the temples 901 are parts to come into contact with the area near the temporal region of a user wearing the eyeglass-type device 900.

In addition, devices such as a glove-type device, a ring-type device, a pencil-type device, a pen-type device, a virtual reality (VR) headset, and a controller of a game machine can also be equipped with an electroencephalogram sensor and a peripheral sensor.

### Others

Although the above description assumes that biometric data of users during consumption of content is measured and used for estimation of internal states, behaviors of the users to be subjected to a measurement of the biometric data are not limited to consumption of content. In other words, as long as biometric data when users to be subjected to compatibility calculation are performing the same behavior is used, biometric data of users performing different behaviors can be used for estimation of the internal states. For example, biometric data of users who perform various behaviors such as doing the same exercise, singing the same song, and eating the same dish and have the same experience can be used for estimation of the internal states.

Although the above describes that presentation (feedback) of compatibility is performed using a screen display, it may be performed using audio, or may be performed using stimulation to the bodies of the users such as vibration.

### Configuration Example of Computer

The above-described series of processing steps can be executed by hardware or software. In a case where the series of processing steps is executed by software, a program constituting the software is installed from a program recording medium to a computer embedded in dedicated hardware, a general-purpose personal computer, or the like.

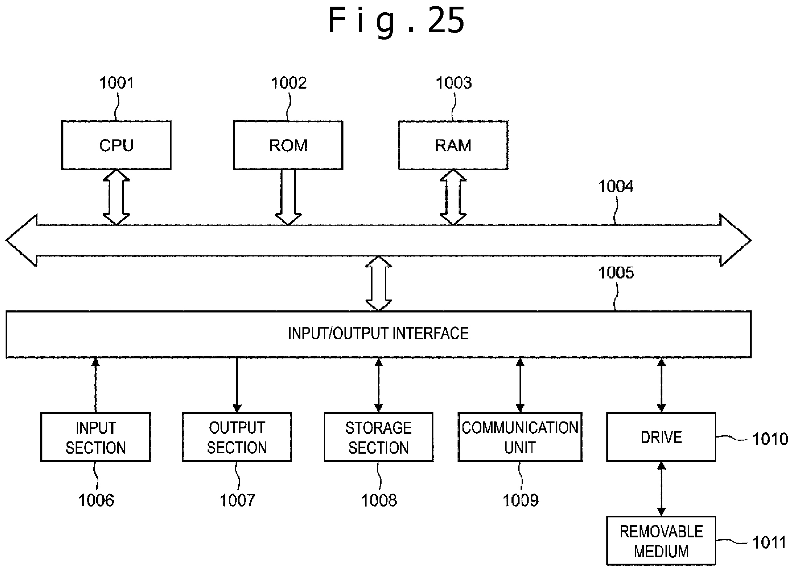

Fig. 25 is a block diagram illustrating a configuration example of hardware for a computer that executes the above-described series of processing steps in a program. For example, the information processing apparatus 1 and the information processing server 101 are realized by a computer having the configuration illustrated in Fig. 25.

A central processing unit (CPU) 1001, a read only memory (ROM) 1002, and a random access memory (RAM) 1003 are connected to each other by a bus 1004.

An input/output interface 1005 is also connected to the bus 1004. An input section 1006 including a keyboard, a mouse, and the like and an output section 1007 including a display, a speaker, and the like are connected to the input/output interface 1005. A storage section 1008 including a hard disk, a nonvolatile memory, or the like, a communication unit 1009 including a network interface or the like, and a drive 1010 that drives a removable medium 1011 are connected to the input/output interface 1005.

In the computer configured as described above, the CPU 1001 loads a program stored in the storage section 1008, for example, into the RAM 1003 via the input/output interface 1005 and the bus 1004, and executes the program, thus performing the above-mentioned series of processing steps.

The program executed by the CPU 1001 is, for example, recorded on the removable medium 1011, or provided via a wired or wireless transmission medium such as a local area network, the Internet, and digital broadcast, and installed in the storage section 1008.

The program executed by the computer may be a program in which processing is performed in time series in the order described in the present specification, or may be a program in which processing is performed in parallel or at a necessary timing such as when a call is performed.

In the present specification, the system means a set of a plurality of components (devices, modules (parts), and the like), and it does not matter whether all the components are in the same housing. Therefore, the system refers to both a plurality of devices housed in separate housings and connected via a network, and one device in which a plurality of modules are housed in one housing.

Note that the effects described in the present specification are merely examples and are not limited, and other effects may be produced.

The embodiments of the present technology are not limited to the above-described embodiments, and various modifications can be made without departing from the gist of the present technology.

For example, the present technology can have a configuration of cloud computing in which one function is distributed and processed in cooperation by a plurality of devices via a network.

Further, each step described in the above-described flowchart can be performed by one device or can be shared and executed by a plurality of devices.

Further, when a single step includes multiple processes, the multiple processes included in that single step can be executed by a single device, or can be shared and executed by a plurality of devices.

### Combination Example of Configurations

Note that the present technology may also have the following configurations.
(1) An information processing apparatus including:
   an estimation unit configured to estimate, based on biometric data measured during consumption of content, an internal state of a person subjected to a measurement of the biometric data;
   a compatibility calculation unit configured to calculate compatibility between persons, based on time-series data indicating the internal state in a specific interval of the entire content; and
   a presentation control unit configured to present a determination result of the compatibility including information related to the specific interval.
(2) The information processing apparatus according to (1) above, wherein
   the presentation control unit presents the determination result including information indicating details of the specific interval together with information indicating a degree of the calculated compatibility.
(3) The information processing apparatus according to (1) or (2) above, wherein
   the compatibility calculation unit selects the specific interval, based on attribute information indicating details of respective intervals of the content, and
   the presentation control unit presents the determination result including information indicating details of the selected specific interval.
(4) The information processing apparatus according to (1) above, wherein
   the compatibility calculation unit selects the specific interval, based on a change in the internal state of a reference person among persons to be subjected to compatibility calculation, and
   the presentation control unit presents the determination result including information on the reference person as information related to the specific interval.
(5) The information processing apparatus according to (4) above, wherein
   the compatibility calculation unit selects, as the specific interval, at least one of an interval in which a value equal to or greater than a threshold is calculated as a value indicating the internal state or an interval in which a difference equal to or greater than a threshold is calculated.
(6) The information processing apparatus according to (1) above, wherein
   the presentation control unit presents, as the determination result including information related to compatibility between a specific person and another person, information based on a plurality of values of compatibility between the persons belonging to a group to which the specific person and the other person belong.
(7) The information processing apparatus according to (6) above, wherein
   the presentation control unit presents the determination result including information related to a distribution of the compatibility between the persons belonging to the group.
(8) The information processing apparatus according to (1) above, wherein
   the compatibility calculation unit calculates the compatibility between all combinations of the persons belonging to the group.
(9) The information processing apparatus according to (8) above, wherein
   the presentation control unit presents the determination result including information related to a distribution of the compatibility between a specific person and all other persons, on an individual basis, belonging to the group.
(10) The information processing apparatus according to (8) above, wherein
   the presentation control unit presents the determination result including information related to a person with highest compatibility among the persons belonging to the group.
(11) The information processing apparatus according to any one of (1) to (10) above, wherein
   an acquisition unit configured to receive and acquire the biometric data transmitted from a sensor, and the presentation control unit transmits, via a network, information including the determination result to a user terminal used by respective persons subjected to the measurement of the biometric data, and presents the determination result.
(12) An information processing method including:
   estimating, by an information processing apparatus, based on biometric data measured during consumption of content, an internal state of a person subjected to a measurement of the biometric data;
   calculating, by the information processing apparatus, compatibility between persons, based on time-series data indicating the internal state in a specific interval of the entire content; and
   presenting, by the information processing apparatus, a determination result including information related to the specific interval.
(13) A program causing a computer to execute processing of:
   estimating, based on biometric data measured during consumption of content, an internal state of a person subjected to a measurement of the biometric data;
   calculating compatibility between persons, based on time-series data indicating the internal state in a specific interval of the entire content; and
   presenting a determination result including information related to the specific interval.

### Reference Signs List

1 Information processing apparatus, 11 Biometric sensor, 12 User terminal, 21 Information processing unit, 22 Storage section, 31 Biometric data acquisition unit, 32 Signal processing unit, 33 Internal state estimation unit, 34 Compatibility calculation unit, 35 Presentation control unit

## Claims

1. An information processing apparatus, comprising:
an estimation unit configured to estimate, based on biometric data measured during consumption of content, an internal state of a person subjected to a measurement of the biometric data;
a compatibility calculation unit configured to calculate compatibility between persons, based on time-series data indicating the internal state in a specific interval of the entire content; and
a presentation control unit configured to present a determination result of the compatibility including information related to the specific interval.

2. The information processing apparatus according to claim 1, wherein
the presentation control unit presents the determination result including information indicating details of the specific interval together with information indicating a degree of the calculated compatibility.

3. The information processing apparatus according to claim 1, wherein
the compatibility calculation unit selects the specific interval, based on attribute information indicating details of respective intervals of the content, and
the presentation control unit presents the determination result including information indicating details of the selected specific interval.

4. The information processing apparatus according to claim 1, wherein
the compatibility calculation unit selects the specific interval, based on a change in the internal state of a reference person among persons to be subjected to compatibility calculation, and
the presentation control unit presents the determination result including information on the reference person as information related to the specific interval.

5. The information processing apparatus according to claim 4, wherein
the compatibility calculation unit selects, as the specific interval, at least one of an interval in which a value equal to or greater than a threshold is calculated as a value indicating the internal state or an interval in which a difference equal to or greater than a threshold is calculated.

6. The information processing apparatus according to claim 1, wherein
the presentation control unit presents, as the determination result including information related to compatibility between a specific person and another person, information based on a plurality of values of compatibility between persons belonging to a group to which the specific person and the other person belong.

7. The information processing apparatus according to claim 6, wherein
the presentation control unit presents the determination result including information related to a distribution of the compatibility between the persons belonging to the group.

8. The information processing apparatus according to claim 1, wherein
the compatibility calculation unit calculates the compatibility between all combinations of the persons belonging to the group.

9. The information processing apparatus according to claim 8, wherein
the presentation control unit presents the determination result including information related to a distribution of the compatibility between a specific person and all other persons, on an individual basis, belonging to the group.

10. The information processing apparatus according to claim 8, wherein
the presentation control unit presents the determination result including information related to a person with highest compatibility among the persons belonging to the group.

11. The information processing apparatus according to claim 1, wherein
an acquisition unit configured to receive and acquire the biometric data transmitted from a sensor, and
the presentation control unit transmits, via a network, information including the determination result to a user terminal used by respective persons subjected to the measurement of the biometric data, and presents the determination result.

12. An information processing method, comprising:
estimating, by an information processing apparatus, based on biometric data measured during consumption of content, an internal state of a person subjected to a measurement of the biometric data;
calculating, by the information processing apparatus, compatibility between persons, based on time-series data indicating the internal state in a specific interval of the entire content; and
presenting, by the information processing apparatus, a determination result including information related to the specific interval.

13. A program causing a computer to execute processing of:
estimating, based on biometric data measured during consumption of content, an internal state of a person subjected to a measurement of the biometric data;
calculating compatibility between persons, based on time-series data indicating the internal state in a specific interval of the entire content; and
presenting a determination result including information related to the specific interval.
